# EUROPEAN PATENT APPLICATION

(11) **EP 4 187 651 A1**
(43) Date of publication of application: **31.05.2023**
(21) Application number: 22210282.4
(22) Date of filing: 29.11.2022
(51) Int. Cl.: H01M 4/86, H01M 4/88, H01M 4/90, H01M 4/92, H01M 8/12

(54) **ELECTROCHEMICAL DEVICE**

(30) Priority: 29.11.2021 IT 202100030104
(71) Applicant: Pietro Fiorentini S.p.A., 36057 Arcugnano (VI) (IT); Universita' Degli Studi Di Padova, 35131 Padova (IT)
(72) Inventor: SQUIZZATO, Enrico, 35131 PADOVA (IT); GLISENTI, Antonella, 35131 PADOVA (IT); CAROLLO, Giovanni, 35131 PADOVA (IT); BEDON, Andrea, 35131 PADOVA (IT); ROSSI, Daniele Plutarco, 36057 ARCUGNANO (VI) (IT); IMBOCCIOLI, Claudio, 36051 CREAZZO (VICENZA) (IT)
(74) Representative: Braidotti, Andrea

(57) **Abstract**

Electrochemical device (1) for the production of electrical energy starting from at least one hydrocarbon, preferably methane, or from hydrogen or any mixture thereof, or from bioalcohols, bioethers, syngas, biogas, or ammonia, comprising at least one electrochemical cell (6) which includes:
- an anode electrode (8),
- a cathode electrode (10),
- an electrolyte (12) which is interposed between the anode electrode (8) and the cathode electrode (10) and which is configured to allow the passage of at least one ionic species, and preferably O²⁻ ions
and characterized in that said anodic electrode (8) comprises a nanostructured material comprising CeₓGd_{y}O_{z} which is impregnated and/ or doped with cations of at least one metal selected from Cu, Co, Mo Mn Fe, W, Ag, Au, Cr, and in which Pd or Pt nanoparticles are dispersed.

## Description

### FIELD OF TECHNIQUE

The present invention relates to an electrochemical device, in particular for the production of electrical energy starting from at least one hydrocarbon (preferably methane), hydrogen, or any mixture thereof, from bioalcohols, bioethers, syngas, biogas, or from ammonia. In particular, the present invention relates to an electrochemical device of the solid oxide fuel cell type (called "fuel cell"). More particularly, the electrochemical device according to the invention is of the type capable of converting the chemical energy of methane, hydrogen, or any mixture thereof, as well as of other hydrocarbons, alone or in mixture also with hydrogen, into electrical energy bioalcohols, bioethers, syngas, biogas, or ammonia. In more detail, the electrochemical device object of the present invention is configured to operate a methane oxidation reaction.

The present invention also relates to a material used for making an electrode, and preferably an anodic electrode for electrochemical devices.

### STATE OF THE ART

Electrochemical devices are known which allow to extract electrical energy from the methane oxidation process. These known devices generally operate in two stages:
- a first stage called methane "reforming" which involves the splitting of the methane molecule into hydrogen and carbon, and the consequent partial oxidation of the carbon,
- a second stage of hydrogen oxidation.

Generally between these two stages there is a further purification step of the hydrogen produced in the first stage in order to remove any oxidation products generated in the first stage.

However, this solution is not fully satisfactory since it requires the presence of two separate reactors for the realization of the two stages, and of a reactor in which the hydrogen purification takes place, making the device complex and expensive.

Furthermore, the known devices generally operate at high temperatures (ie at about 750°C), with a consequent increase in the operation costs of the device, and an increase in the restrictions on the materials that can be used in its construction.

Furthermore, the first stage of hydrogen splitting, even in the presence of a catalyst, is slightly endothermic, thus reducing the energy efficiency of the oxidation process as a whole.

WO 2008/121128 describes a direct carbon fuel cell (Direct Carbon Fuel Cell, DCFC), which comprises an anode made of Gadolinium-doped ceria, on which copper and nickel are deposited and decorated with palladium nanoparticles which can operate at temperatures between between 500 and 1200°C.

WO 2018/104736 discloses a solid oxide fuel cell comprising porous particles on which a mixture of copper and nickel oxides is deposited. This fuel cell is also configured to work at at least 570°C.

FR2945378 describes a fuel cell comprising an anode made of gadolinium-doped ceria, on which nickel oxide is deposited.

However, these known solutions are not fully satisfactory since the use of nickel greatly reduces the catalytic power of the cell, thus reducing its general performance.

Kosinsky et al. In "Methanol reforming by nanostructured Pd/Sm-doped ceria catalysts" they describe a methanol fuel cell. However, this known solution is not fully satisfactory since methanol has different properties relative to the oxidation reaction than methane.

### OBJECTS OF THE INVENTION

The object of the invention is to propose an electrochemical device which allows the drawbacks of the known solutions to be overcome, at least in part.

Another object of the invention is to propose an electrochemical device which allows to obtain an oxidation reaction directly on methane.

Another object of the invention is to propose an electrochemical device which allows to reduce the plant complexity of the known solutions.

Another object of the invention is to propose an electrochemical device which does not require a methane reforming stage.

Another object of the invention is to propose an electrochemical device which can work at low temperatures.

Another object of the invention is to propose an electrochemical device which can work at a lower temperature than the ignition temperature of methane.

Another object of the invention is to propose an electrochemical device which is safe to use.

Another object of the invention is to propose an electrochemical device which allows to generate a particularly high power.

Another object of the invention is to propose an electrochemical device which allows to avoid or limit the amount of precious metals used.

Another object of the invention is to propose an electrochemical device which is versatile in terms of the composition of the fuel used.

Another object of the invention is to propose an electrochemical device which can use as fuel also unpurified gas, for example from the presence of CO₂.

Another object of the invention is to propose an electrochemical device which can use as fuel the gases which are distributed by a common gas transport and distribution network.

Another object of the invention is to propose an electrochemical device which can be used as fuel gases that come from a gas network connected to biogas, bioalcohols, bioethers, syngas, or ammonia production centres.

Another object of the invention is to propose an electrochemical device which is quick and/or simple to make.

Another object of the invention is to propose an electrochemical device which can be manufactured with low costs.

Another object of the invention is to propose an electrochemical device which allows maintenance and maintenance costs to be reduced.

Another object of the invention is to propose an electrochemical device which is an alternative and/or improvement with respect to the traditional solutions.

### SUMMARY OF THE INVENTION

All the purposes mentioned here, considered both individually and in any combination thereof, and still others which will result from the following description, are achieved according to the invention with a device according to claim 1, a method for producing electric energy according to claim 6, a method for the preparation of a nanostructured material according to claim 8, and a nanostructured material according to claim 15.

### DETAILED DESCRIPTION OF THE FIGURES

The present invention is hereinafter further clarified in some of its preferred embodiments shown for purely exemplifying and non-limiting purposes with reference to the attached tables of drawings, in which:
- Figure 1: schematically shows a device according to the invention in the configuration in which the structural support is mainly/only defined by the separating wall (electrolyte),
- Figure 2: shows it in schematic view in the configuration in which the structural support is mainly/only defined by the anode electrode,
- Figure 3: shows it in schematic view in the configuration in which the structural support is mainly/only defined from the cathode electrode,
- Figure 4: shows it in schematic view in the configuration in which the structural support is mainly/only defined from an external medium,
- Figure 5: shows in schematic view an apparatus comprising five stacked devices according to the invention,
- Figure 6: schematically shows a device according to the invention in a configuration with only one chamber,
- Figure 7: schematically shows a device according to the invention in an embodiment with two chambers,
- Figure 8: shows a diffractogram of the material according to the invention following the doping stage,
- Figure 9: shows a Raman spectrum of the material according to the invention following the step of adding a further component,
- Figure 10: shows a pair of scanning electron microscopy images of the material according to the invention following the stage of adding a further component, in particular added by infiltration (fig. 10 a) and by incipient wetness impregnation (fig. 10 b)
- Figure 11a: shows the results of an electrochemical impedance spectroscopy (EIS) experiment on a device according to the invention with different amounts of further component deposited on the upper surface of the anode electrode,
- Figure 11b: shows the results of a similar experiment carried out on devices containing the same amount of additional component infiltrated in a different way,
- Figure 12: shows a Nyquist diagram for a device according to the invention in which both the cathode electrode and the anode electrode are made of a material according to the invention, in which the further component consists of palladium, and in particular for electrodes comprising different quantities of palladium, (the tests were carried out with the device kept at 650°C and with a gas mixture composed of 50% CH ₄ and 50% Ar),
- Figure 13: shows the variation of the resistance values per unit of area (area specific resistance, ASR) as a function of the activation time of the device according to the invention, in which both the cathode electrode and the anode electrode are made with a material according to the invention, in particular wherein the further component consists of 2% palladium,
- Figure 14a: shows the Raman spectra obtained in operand of the gas contained inside the anode electrode of the device according to the invention as a function of the temperature,

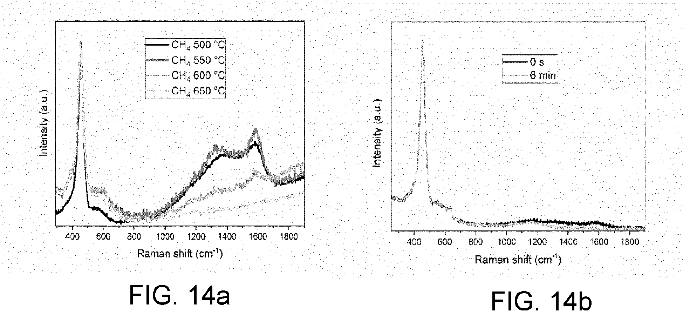

- Figure 14 b: as a function of the time elapsed after the start of a purge with an inert gas, in particular N₂,

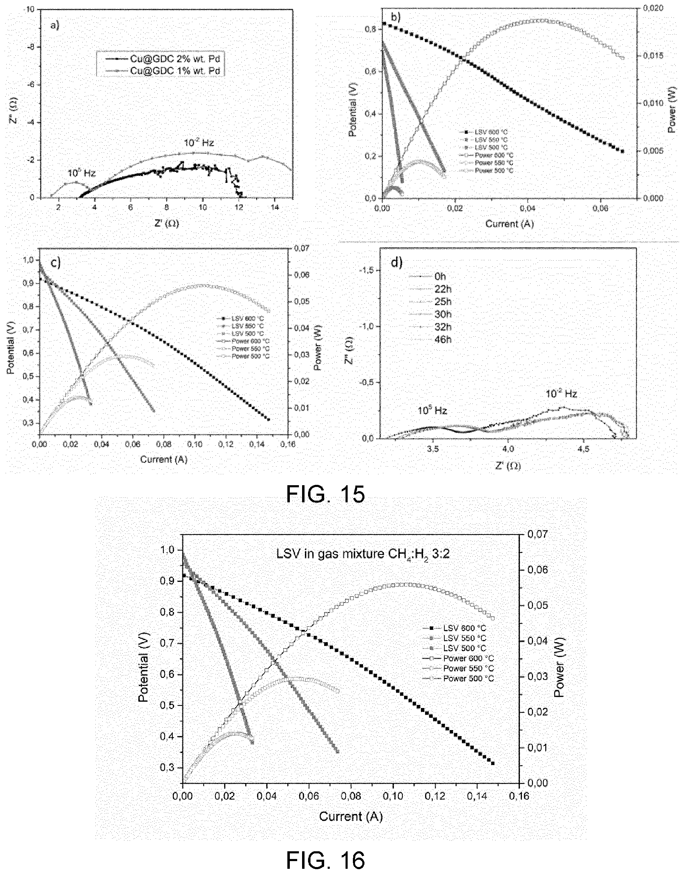

- Figure 15: shows a) the Nyquist diagram of a device according to the invention comprising a cathode electrode made of LSCF:GDC 50:50, and anode electrode made of a material according to the invention, and in particular Cu@GDC with 1 or 2% of Pd introduced by incipient wetness impregnation, the tests were carried out at 650°C and with a gas mixture composed of 50%CH₄ and 50% Ar, b) LSV of the cell of fig. 15 a) obtained with a mixture of 100%CH₄, c) Linear scanning voltammetry obtained with a gas mixture of 20%CH₄ and 30%H₂, and the remaining Ar as a function of temperature, d) Nyquist diagram of a device according to the invention, in particular structured as follows: 2%Pd/Cu@CGO/CGO/LSCF at 600°C, obtained for different operating times,
- Figure 16: shows the results of a linear scanning voltammetry (LSV) experiment on a cell according to the invention comprising Lanthanum Strontium Cobalt Ferrite (LSCF): Gadolinium-doped ceria (GDC) (50:50)/ GDC/Cu@GDC-2%Pd(wt) in a gas mixture comprising CH₄ :H₂ in a ratio of 3:2, and

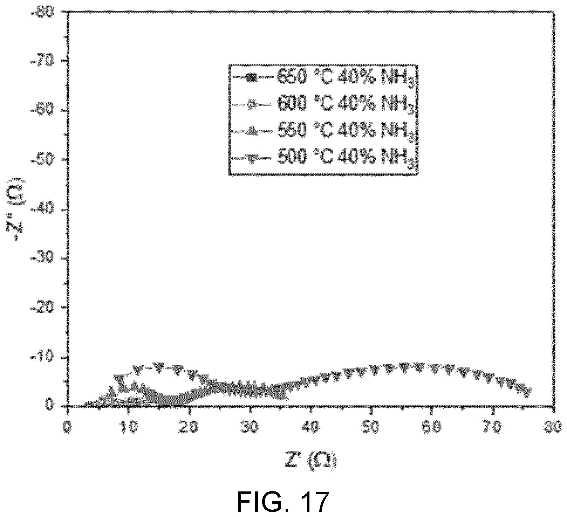

- Figure 17: shows a Nyquist diagram of a device according to the invention which has an anodic electrode comprising Cu@GDC doped with Pd 2% by weight, in an ammonia atmosphere at 40% between 650°C and 500°C.

### DETAILED DESCRIPTION OF THE INVENTION AND SOME OF ITS PREFERRED EMBODIMENTS

As can be seen from the figures, the present invention relates to an electrochemical device 1, in particular for the production of electric energy starting from at least one hydrocarbon (preferably methane), or from hydrogen or from any mixture thereof, from bioalcohols, bioethers, syngas, biogas, or from ammonia. More particularly, the electrochemical device 1 is of the type capable of converting the chemical energy of methane, or hydrogen, or any mixture thereof, as well as of other hydrocarbons, alone or in mixture also with hydrogen, into electrical energy.

Preferably, the electrochemical device 1 is of the solid oxide fuel cell type (called "fuel cell").

Preferably, the device 1 can be configured to generate energy from a methane oxidation reaction. In particular, the device can be configured to operate the following reaction:

*CH*₄ + 2*O*₂ → 2*H*₂*O* + *CO*₂

It is conveniently understood that any accessory and/or parasitic reactions, which for example may include the cracking of methane into carbon and hydrogen and the subsequent separate oxidation of hydrogen and/or carbon, or incomplete oxidations leading to the formation of carbon monoxide they can also occur within the device according to the invention.

The device 1 according to the invention comprises at least one electrochemical cell 6.

The electrochemical cell 6 comprises an anode electrode 8 and a cathode electrode 10 between which an electrolyte 12 is interposed which is configured to allow the passage of at least one ionic species, and preferably of O²⁻ ions

Conveniently, the electrochemical cell 6 is associated or can be associated with an external electric circuit 11 which is connected with the anode electrode 8 and the cathode electrode 10. Preferably, the external electric circuit 11 comprises cables connected or connectable with the anode electrode 2 and the cathode electrode 10.

Advantageously, the device 1 comprises respective electron collectors 13 associated with the anode electrode 8 and with the cathode electrode 10. Preferably, the electron collectors 13 of the anode electrode 8 and of the cathode electrode 10 are electrically connected to each other and preferably in correspondence of this connection a load resistance 15 is provided, in order to allow the generation of current by means of the device 1.

Conveniently, the electrochemical cell 6 comprises at least one chamber 17 inside which the reactions of oxidation of the fuel and/or reduction of the comburent take place, equipped with at least one inlet, and preferably with a single inlet 22 for the reactants of the anodic and cathodic reactions, and of at least one outlet, and preferably of a single outlet 24 for the products of the anodic and cathodic reactions.

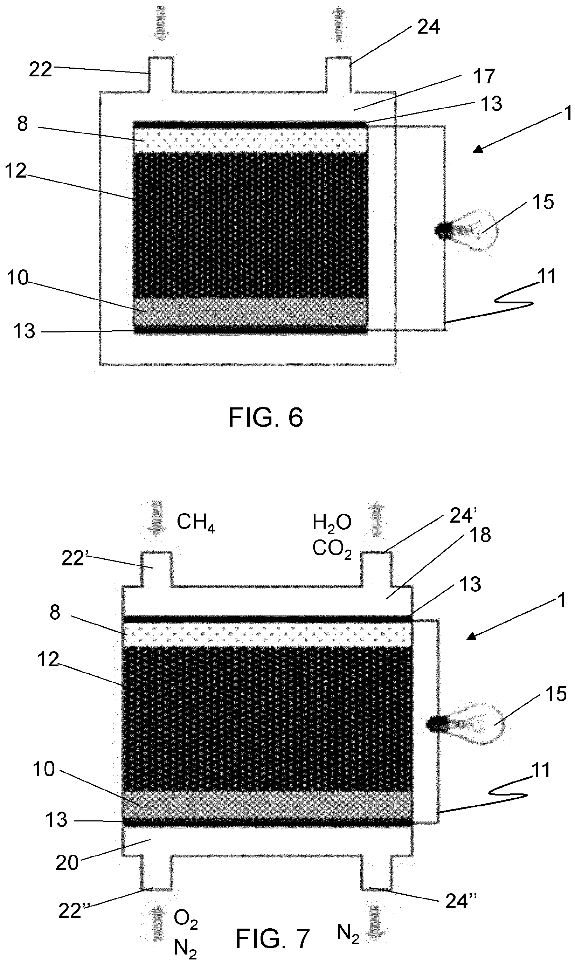

In a possible embodiment represented in figure 7, the electrochemical cell 6 comprises two chambers 18, 20, each of which is provided in correspondence with an electrode. In particular, in the possible embodiment of fig. 7, the electrochemical cell 6 may comprise:
- a first chamber 18 at the anodic electrode 8 and provided with a first inlet 22' for the reactant of the anodic reaction - i.e. fuel, which is preferably methane, or another hydrocarbon, or hydrogen, or a mixture thereof, bioalcohols, bioethers, syngas, biogas, or ammonia - and an outlet 24' for the burnt product - which is preferably carbon dioxide and/or water, and/or for any further products of the anodic reaction and/or for other unreacted reactants and/ or intermediate reaction products, and
- a second chamber 20 in correspondence with the cathode electrode 10 and provided with a second inlet 22" for the comburent - which is preferably oxygen and a possible carrier which can preferably be nitrogen - and with an outlet 24" for the carrier and for any unreacted oxidizing agent.

In more detail, if the electrochemical cell is used with methane, the oxidation reaction can take place in correspondence with the anodic electrode 8, and preferably the oxidation of the methane takes place and also at least one of the following accessory and /or parasite reactions can take place:

*H*₂ + *O*²⁻ → *H*₂*O* + 2*e*⁻

*CH*₄ + 3*O*²⁻ → *CO* + 2*H*₂*O* + 6*e*⁻

*CH*₄ + 4*O*²⁻ → *CO*₂ + 2*H*₂*O* + 8*e*⁻

*CH*₄ *C* + 4*H*₂

*C* + *O*²⁻ → *CO* + 2*e*⁻

*C* + 2 *O*²⁻ → *CO*₂ + 4 *e*⁻

In more detail, the reduction reaction can take place at the cathode electrode 10, and in particular the oxygen cracking reaction

*O*₂ + 4*e*⁻ → 2*O*²⁻

Conveniently, as mentioned, the anode electrode 8 and the cathode electrode 10 are separated from each other by an electrolyte 12 which is configured to allow the passage of ions, and in particular to allow the passage of *O*²⁻ ions.

### Anode electrode

The anode electrode 8 comprises a nanostructured material comprising CeₓGd_{y}O_{z}, Cu(II), Pd cations.

Preferably, the anode electrode 8 comprises, and preferably consists of, a nanostructured material comprising CeₓGd_{y}O_{z}, impregnated and/or doped with nanoparticles comprising Cu(ll) cations, and in which they are dispersed and/or which is decorated with Pd nanoparticles. Preferably, said anode electrode 8 comprises a composite material containing CeₓGd_{y}O_{z} (hereinafter CGO) in which preferably:
- "x" is greater than or equal to 0.5 and less than or equal to 1,
- "y" is greater than 0 and less than or equal to 0.5,
- "z" is greater than or equal to 1 and less than or equal to 3.

Preferably, the anode electrode 8 comprises a composite material containing Ce_{0.9}Gd_{0.1}O_{1.95}.

Preferably, the anode electrode is composed of a nanostructured material which consists of Pd, Cu and/or CuO and CeₓGd_{y}O_{z} (hereinafter CGO) in which
- "x" is greater than or equal to 0.5 and less than or equal to 1,
- "y" is greater than 0 and less than or equal to 0.5,
- "z" is greater than or equal to 1 and less than or equal to 3.

Preferably the amount of Pd in the anode electrode 8 can be between 1 and 3% by weight, and more preferably it can be about 2% by weight. Preferably it can be between 1 and 3% by weight, and more preferably it can be about 2% by weight of the CGO.

Preferably, said anodic electrode 8 is composed of a nanostructured material comprising CeₓGd_{y}O_{z}, impregnated and/or doped with Cu(ll) cations, and in which Pd nanoparticles are dispersed, and in which:
- "x" is greater than or equal to 0.5 and less than or equal to 1, preferably equal to 0.9,
- "y" is greater than 0 and less than or equal to 0.5, preferably equal to 0.1,
- "z" is greater than or equal to 1 and less than or equal to 3, preferably equal to 1.95.

Preferably, the anode electrode 8 is made of a nanostructured material which consists of Pd, Cu and Ce _{0.9} Gd _{0.1} O _{1.95}.

In a possible alternative embodiment instead of and/or in addition to Copper, Molybdenum, Cobalt, Manganese, Iron, Tungsten, Silver, Gold or Chromium can be used.

In a possible alternative embodiment instead of and/or in addition to Pd, Pt can be used.

Substantially therefore, the anodic electrode 8 comprises a nanostructured material comprising CeₓGd_{y}O_{z}, Cu, o Mo, Co, Mn, Fe, W, Ag, Au, Cr cations, and Pd or Pt cations, preferably metallic.

Preferably, the anode electrode 8 comprises, and preferably consists of, a nanostructured material comprising CeₓGd_{y}O_{z}, impregnated and/ or doped with nanoparticles comprising Cu, Mo, Co, Mn, Fe, W, Ag, Au cations, Cr, and in which Pd or Pt nanoparticles are dispersed.

In a preferred embodiment, the anode electrode does not comprise nickel, and this in order to improve the performance of the electrode itself.

Advantageously, the CGO may not be impregnated and/or doped with nickel.

Advantageously, therefore, the Cu (or its substitutes listed above) may not be present within the crystalline structure of the CGO, but only on the surface. Substantially therefore the CGO, and in particular the CGO powder, can be impregnated with Cu, Mo, Co, Mn, Fe, W, Ag, Au, Cr preferably in the form of stable oxides.

In a preferred embodiment, the anode electrode can consist of a nanostructured material comprising CeₓGd_{y}O_{z}, impregnated with CuO nanoparticles, and in which Pd nanoparticles are dispersed, and in which:
- "x" is greater than or equal to 0.5 and less than or equal to 1, preferably equal to 0.9,
- "y" is greater than 0 and less than or equal to 0.5, preferably equal to 0.1,
- "z" is greater than or equal to 1 and less than or equal to 3, preferably equal to 1.95.

### Method of preparation of a nanostructured material, in particular for the realization of an anodic electrode

The present invention also relates to a method of preparing a nanostructured material to be used for making an anodic electrode 8 of an electrochemical device 1.

In particular, the nanostructured material of which it is made, and preferably of which the anodic electrode 8 of the electrochemical device 1 is made, can be prepared with a method which provides, preferably in order, the following steps:
- a step of making available a precursor comprising CeₓGd_{y}O_{z},
- a doping and/or impregnation step of said precursor with cations and/or atoms of a metal, preferably with cations and/or atoms of transition metals, preferably selected from Cu, Co, Mo Mn Fe, W, Ag, Au, Cr, and more preferably with Cu (II) cations, to thus obtain a doped intermediate,
- a step of adding a further component, preferably based on Pd or Pt, to said doped intermediate, to thus obtain said nanostructured material.
Conveniently, the addition of said further component to the impregnated and/or doped intermediate can be carried out before or after the deposition of the impregnated and/or doped intermediate on a substrate.

In a preferred embodiment, the method can comprise, preferably after the doping and/or impregnation step, a preliminary step of deposition of the impregnated and/or doped intermediate on a substrate and, subsequently, said addition step is carried out - and in particular of depositing - of a further component, preferably based on Pd or Pt, on the impregnated and/or doped intermediate already previously deposited on the substrate. Alternatively, in a further embodiment, the method provides that said further component, preferably based on Pd or Pt, is first added to the impregnated and/or doped intermediate alone and that what thus obtained is then subsequently deposited on the substrate.

Advantageously, the precursor can consist of a powder of CeₓGd_{y}O_{z}, wherein:
- "x" is greater than or equal to 0.5 and less than or equal to 1,
- "y" is greater than 0 and less than or equal to 0.5,
- "z" is greater than or equal to 1 and less than or equal to 3.

Preferably, the powder is of Ce_{0.9}Gd_{0.1}O_{1.95}.

Preferably, the doping and/or impregnation step provides for placing said precursor in contact with a solution and/or a suspension containing said cations and/or atoms of a metal, preferably with cations and/or atoms of transition metals selected from Cu, Mn, Co, Mo, Fe, W, Ag, Au, Cr, and more preferably with Cu(ll) cations. In a preferred embodiment, the doping and/or impregnation step provides for the introduction into a solution of a powder of said precursor and a powder containing said cations and/or atoms of a metal, preferably with cations and/or atoms of metals of transition selected from Cu, Mn, Co, Mo, Fe, W, Ag, Au, Cr, and more preferably with Cu(II) cations. For example said cations can be present in the form of CuO oxide, or another Cu(ll) salt, preferably a nitrate.

In a possible embodiment, the amount of solution used in the doping and/or impregnation step can be substantially correlated with the pore volume in the CGO substrate, and in particular can be substantially equal.

In a preferred embodiment, the solution used in the doping and/or impregnation step and containing the cations and/or atoms of a metal can also comprise at least one complexing agent, preferably at least one of the following complexing agents: citric acid, ethylenediaminetetraacetic acid (EDTA), glycine, maleic acid. Conveniently, the molar ratio between the ions of a metal and the complexing agent can be between 1 and 3, and preferably equal to about 1.9. In a preferred embodiment, the solvent of the solution used in the doping and/or impregnation step and containing said cations and/or metal atoms can be water, but any other solvent capable of dissolving the precursors and the complexing. Conveniently, the solution used in the doping and/or impregnation stage can be at pH 8.

Advantageously, the doping and/or impregnation step comprises a step of thermal treatment of the intermediate which is obtained from the reaction of the precursor with a solution containing cations and/or atoms of a metal, preferably with cations and/or atoms of transition metals selected from Cu, Mn, Co, Mo, Fe, W, Ag, Au, Cr, and more preferably containing Cu(ll) cations.

Advantageously, the heat treatment step of the intermediate can include:
- a sub-phase of evaporation of the solvent, during which the solution containing said cations and/or atoms of a metal is left at a temperature lower than 100°C (and this in order to keep the evaporation rate constant and not too high) until the evaporation of the solvent is obtained; this then allows to obtain an optimal structure and composition of the nanostructured material; advantageously, in this way a gel is formed whose structure is given by the complexing agent which is used, and/or
- a sub-step of calcining the intermediate into the desired crystalline form, and preferably into a face-centered cubic structure; preferably, the calcination sub-stage can be carried out by heating to a temperature higher than 500°C, and preferably to a temperature of about 600°C.

Conveniently, said doping and/or impregnation step can comprise a sub-step of chemical transformation of said cations of a metal, which allows to obtain oxide particles of said metal cations, for example Cu, Co, Mo, Mn, Fe, W, Ag, Au, Cr.

Advantageously, after said doping and/or impregnation step a substrate is obtained on which nano particles of copper(ll) oxide with a diameter of less than 100 nm, and preferably less than 50 nm, and more preferably less than 30 nm are dispersed.

Advantageously, the method provides - after the doping and/or impregnation stage, and after any heat treatment stage, and before the deposition stage - a preparation stage of a solution (also called "ink") starting from the impregnated and/or doped intermediate and a preliminary stage of deposition of the ink, thus obtained, on a substrate. Conveniently, in this case, the deposition step then provides for the addition of a further component, preferably based on Pd or Pt, to the substrate on which said ink has been previously deposited.

Conveniently, the step of preparing the ink starting from the impregnated and/or doped intermediate provides for the suspension of the impregnated and/or doped intermediate in a further solvent in order to obtain a suspension of viscosity suitable for being deposited on a substrate. Conveniently, said further solvent can be different from the solvent used in the doping and/or impregnation step, or preferably it can be the same solvent, and in particular it can be water.

Advantageously, the method according to the invention also provides for the addition of at least one porous agent to the impregnated and/or doped intermediate, preferably to the ink obtained starting from the impregnated and/or doped intermediate, and this addition can be carried out before or after its deposit on the substrate. Suitably, therefore, the impregnated and/or doped intermediate - and preferably in the form of ink - and said at least one porous agent can be deposited together or separately on the substrate. Conveniently, said at least one porous agent configured to allow the formation of pores in the ink and/or in its components following and/or during its adhesion to the anodic electrode 8 and/or cathodic electrode 10 can be added to the ink, as will be clear later. For example, said purifying agents can comprise carbon-based particles, such as multi-dispersed carbon, or cellulose, or any other material which, at the temperatures at which the heat treatment of the ink takes place, as will become clear later on, can form gaseous products. In an alternative embodiment, the impregnated and/or doped intermediate and/or the porous agents can be deposited on said substrate without starting from a liquid and/or viscous solution.

Conveniently, the preliminary deposition stage of the impregnated and/or doped intermediate - preferably in the form of ink - on the substrate, can take place for example by a tape casting process or by other thin layer deposition processes, preferably non-vacuum.

In a preferred embodiment, the substrate on which the deposit takes place can be constituted by the electrolyte 12, but it could also be another substrate, for example a substrate intended to then form part of the anode electrode 8 or the electron collector 13 associated with the anode electrode.

Conveniently, the preliminary deposition step of the impregnated and/or doped intermediate - preferably in the form of ink - on the substrate can include a plurality of deposition sub-steps until a layer of the desired thickness is obtained.

Conveniently, the method can comprise, after the preliminary deposition step of the impregnated and/or doped intermediate (preferably in the form of ink) on the substrate, a step of heating the material thus obtained in order to allow the evaporation of the solvent. Preferably, during the heating stage, the ink can be brought to a temperature higher than 900°C, and more preferably not higher than 1050°C. Advantageously, moreover, the heating step can allow to obtain a better adhesion of the impregnated and/or doped intermediate to said substrate.

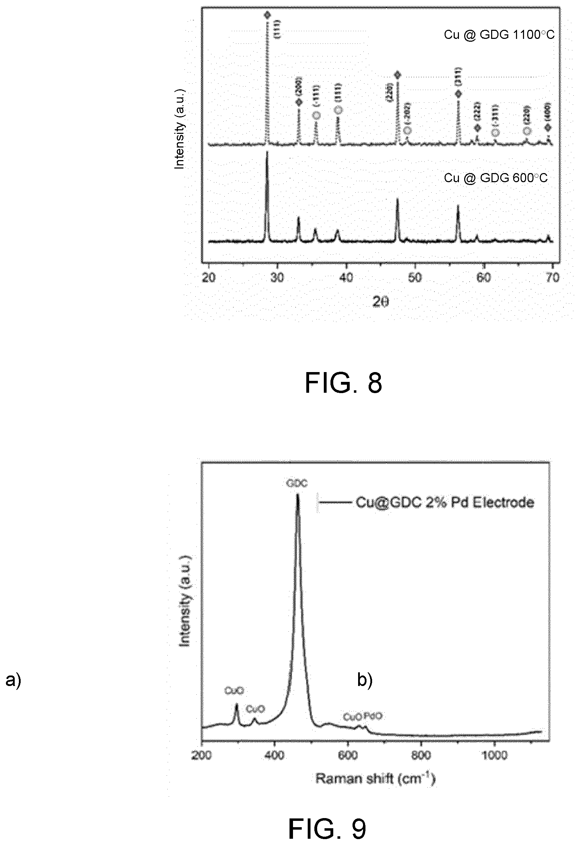

Advantageously, as shown in fig. 8, this does not lead to excessive coalescence of the particles comprising cations and/or atoms of a metal.

Conveniently, the further component can consist of Pd or a Pd-containing compound. Alternatively and/or additionally the further component may comprise Pt.

Conveniently, the step of adding a further component, preferably based on Pd or Pt, can be carried out by deposition from the liquid phase. In particular, in order to form the nanostructured material, the impregnated and/or doped intermediate can be brought into contact with a solution containing said further component. Preferably, said solution contains and/or consists of palladium dispersed and/or dissolved in a suitable solvent, for example water.

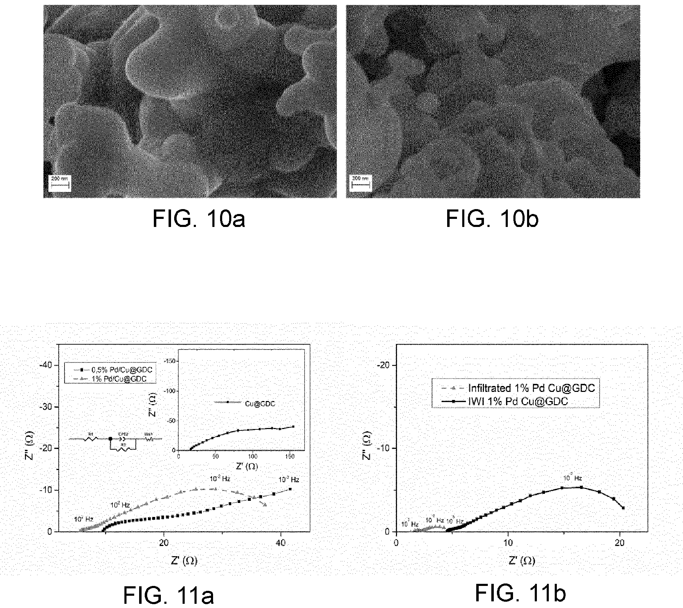

Advantageously, the addition of the solution containing said further component, preferably based on Pd or Pt, can be achieved by a traditional liquid phase deposition method, alternatively it can be achieved by "incipient wetness infiltration" (IWI). Alternatively this can be achieved by simple infiltration. The IWI method is clearly advantageous, as shown in figure 11b) since it allows to reduce the resistance associated with the entire operation of the device 1 according to the invention.

Advantageously, the further component can therefore be added when the impregnated and/or doped intermediate has already been deposited on a substrate, and is therefore in the form of a film and/or thin layer.

Advantageously, the effectiveness of the step of adding a further component can be monitored by Raman spectroscopy, as shown in Figure 9 or by scanning electron microscopy (SEM), as shown in Figures 10a and 10b.

In a possible embodiment, the amount of solution used in the step of adding a further component can be substantially correlated with the volume of pores in the CGO substrate, and in particular can be substantially equal.

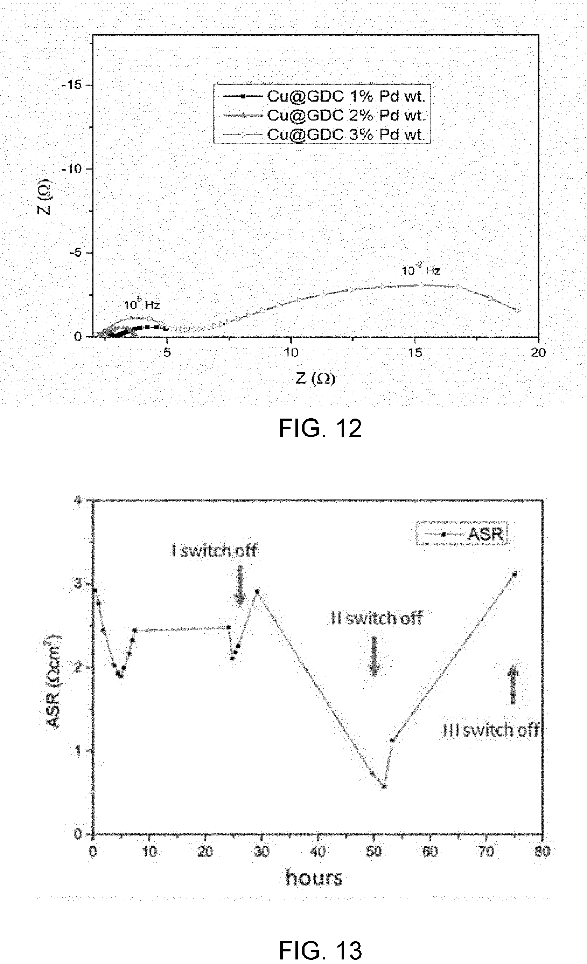

The advantages obtained in the electrochemical reaction by using an anode electrode comprising said further component are clearly shown in figures 11 and 12.

Furthermore, following the step of adding a further component, preferably based on Pd or Pt, on the impregnated and/or doped intermediate, a further high temperature treatment step can be provided, preferably at about 450°C, at in order to allow the evaporation of the solvent and/or the precipitation/formation of nanoparticles of said further component having a dimension lower than 100nm, which will therefore be found on the surface and/or incorporated/dispersed within the nanostructured material.

In a preferred embodiment said further component can be present in a range between 1 and 3% by weight on the weight of the anodic electrode 8, and more preferably it can be present in about 2% by weight of the electrode anodic 8.

Advantageously, the anodic electrode 8 can have a thickness of between 10 and 100 microns, and preferably between 30 and 60 microns.

In a preferred embodiment, the method for preparing a nanostructured material to be used for making an anodic electrode 8 of an electrochemical device 1 comprises the sequence of the following steps:
- a step of making available a precursor comprising CeₓGd_{y}O_{z},
- a step of doping and/or impregnation of said precursor with metal cations, for example of Cu, Co, Mo, Mn, Fe, W, Ag, Au, Cr, and preferably of Cu to thus obtain an intermediate impregnated and/or doped, said step comprising a heat treatment step of the intermediate obtained by combining said precursor with metal cations, for example Cu, Co, Mo, Mn, Fe, W, Ag, Au, Cr, and preferably of Cu,
- a step of preparing an ink starting from said impregnated and/or doped intermediate and which, in particular, has been heat treated,
- a preliminary deposition step of said ink on a substrate,
- a step of addition and, in particular of deposition, of a further Pd or Pt-based component on said ink which has been previously deposited on said substrate, to thus obtain said nanostructured material.

### Cathode electrode

Conveniently, the cathodic electrode 10 can be made in a manner which is traditional per se and known to the person skilled in the art, for example it can comprise a material based on La₁₋ₓSrₓCo_{1-y}Fe_{y}O_{3-δ}, and /or a material based on manganese, cobalt, or ferrite.

Advantageously, the cathode electrode 10 can have a thickness of between 10 and 100 microns, and preferably between 30 and 60 microns.

### Electrolyte

The electrolyte 12 can be conventional in itself and of a type known to those skilled in the art. The electrolyte 12 can be defined by a membrane configured - ie made of a suitable material, and/or with a suitable porosity - to allow the passage of ions from one side of the membrane to the other. Preferably, in particular, the electrolyte can have a density substantially equal to the theoretical one, and in particular greater than 98% of the theoretical one. In particular, the electrolyte 12 can be configured to allow the passage of O²⁻ ions from an environment at the cathode electrode 10 to an environment at the anode electrode 8. To this end, the electrolyte 12 can be preferably made of a material comprising CeₓGd_{y}O_{z} wherein "x" is greater than or equal to 0.5 and less than or equal to 1, "y" is greater than 0 and less than or equal to 0.5, "z" is greater or equal to 1 and less than or equal to 3 - and preferably in a material comprising Ce_{0.9}Gd_{0.1}O_{1.95} - or alternatively may comprise another electrolyte, such as cerium oxide, stabilized zirconia, or perovskite based electrolytes (such as La, ₋ₓSrₓGa_{1-y}Mg_{y}O_{3-δ}).

Conveniently, the electrolyte can have a thickness between 10 and 1000 microns, and preferably between 150 and 300 microns.

### How to assemble the device

In a preferred embodiment, the device 1 can be assembled by making the anodic electrode 8 last so as to limit the number of heating processes to which this electrode is subjected, thus limiting the diffusion of the elements which compose it towards other parts of device 1.

Advantageously, at least one of the electrolyte 12, the anode electrode 8 and the cathode electrode 10 can be configured to mechanically support the other elements which make up the device 1.

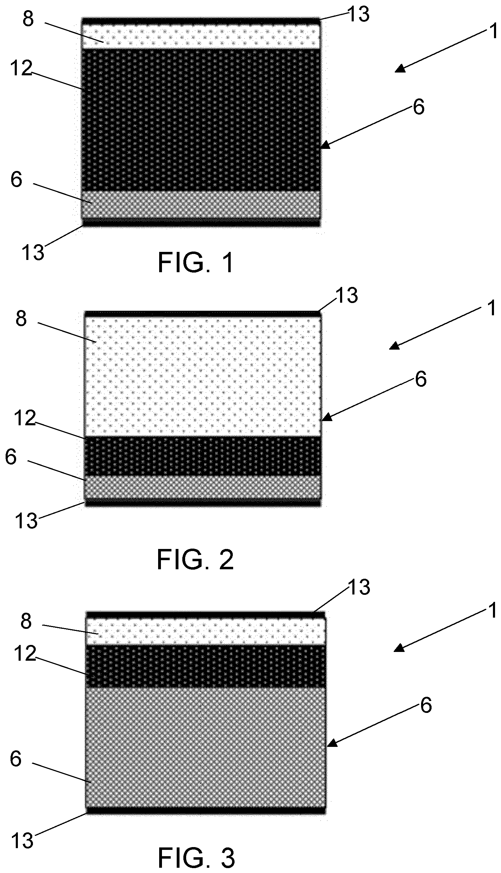

In particular, in a possible embodiment (cf. fig. 1), the structural mechanical support is mainly/only defined by the element 12 which acts as an electrolyte; in another possible embodiment (cf. fig. 2), the structural mechanical support is mainly/only defined by the anode electrode 8; in another possible embodiment (cf. fig. 3), the structural mechanical support is mainly/only defined by the cathode electrode 10.

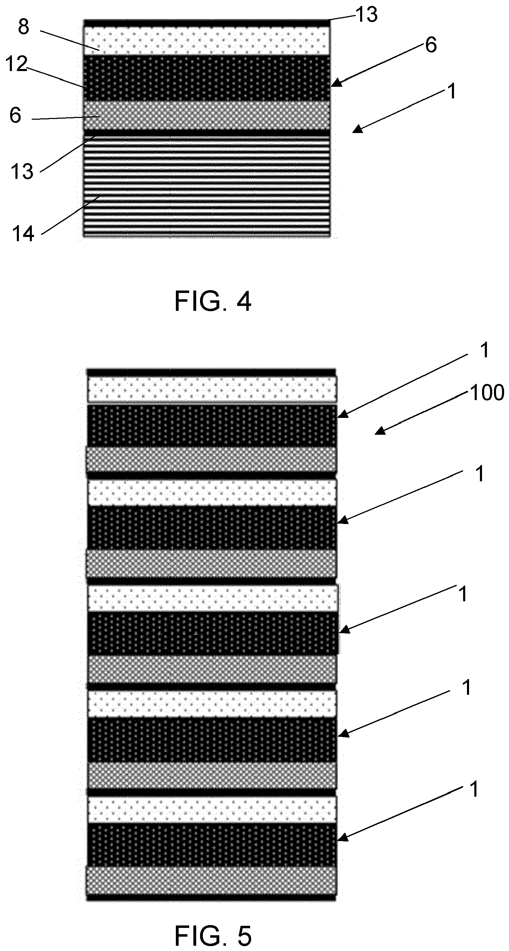

Alternatively, in another possible embodiment (cf. fig. 4), the structural mechanical support of the device can be defined by or comprise an external support 14, which can preferably be made of metallic or ceramic material.

Conveniently, thanks to the anodic electrode 8 made as described above, the electrochemical cell 6 is able to operate at a temperature higher than about 500°C and, preferably, lower than about 600°C, for example it is able to operate at a temperature of about 550°C.

The present invention also relates to an electrochemical apparatus 100 for the production of electric energy by mixing at least two gases. Conveniently the electrochemical apparatus 100 can comprise two or more devices 1 as described above according to the invention. Preferably, said at least two devices 1 of the apparatus 10 are superimposed on each other. Preferably, in a possible embodiment of the apparatus, said devices 1 can be connected in series, ie the cathode electrode of a device 1 can be connected to the anode electrode of the adjacent device, so as to form a stack of devices 1.

### The operation of the device

The operation of the device 1 is clear from what has been said above.

The fuel gas, which is preferably methane, but alternatively can be hydrogen or other, for example with alcohols, other more reactive hydrocarbons, bioethers, syngas, biogas, or with ammonia, is introduced into the chamber 17 (cf. Fig. 6) or first chamber 18 (cf. fig. 7) respectively through the corresponding inlet 22 or first inlet 22', while the combustion gas, which is preferably oxygen, is introduced into the chamber 17 (cf. fig. 6) or second chamber (cf. Fig. 7) respectively through the input 22 or second input 22".

Conveniently, the reduction reaction takes place at the cathode electrode 10

*O*₂ + 4*e*⁻ → 2*O*²⁻

while at the anodic electrode 8 the oxidation reactions take place, which in the case of methane are:

*CH*₄ + 4*O*²⁻ → 2*H*₂*O* + *CO*₂ + 8*e*⁻

The transfer of the O²⁻ ions occurs through the electrolyte 12 from one electrode to another.

The electrons generated at the anode electrode 8 are captured by the electron collector 13, and fed into the network.

Conveniently, the device 1 according to the invention is particularly effective even at low temperatures, as shown by the experiments described in Table 1below, where OCP means Open Circuit Potential.

**Table 1**

| Temperature | Fuel | OCP(V) | Power/area (mW cm⁻²⁾ |
|---|---|---|---|
| 650°C | hydrogen 20% | 0.84 | 71 |
| | methane 100% | | |
| | Methane 30% + Hydrogen 20% | | |
| 600°C | hydrogen 20% | 0.90 | 44 |
| | methane 100% | 0.83 | 17 |
| | Methane 30% + Hydrogen 20% | 0.92 | 52 |
| 550°C | hydrogen 20% | 0.75 | 27 |
| | methane 100% | 0.74 | 4 |
| | Methane 30% + Hydrogen 20% | 0.96 | 29 |
| 500°C | hydrogen 20% | 0.98 | 12 |
| | methane 100% | 0.70 | 1 |
| | Methane 30% + Hydrogen 20% | 0.98 | 14 |

The present invention also relates to a method for the production of electric energy starting from at least one hydrocarbon, preferably methane, or from hydrogen or from any mixture thereof characterized in that it uses an electrochemical device 1 as described above and in which, during use, the electrochemical cell of said device 1 is maintained/operates at a temperature lower than 600°C, and preferably at a temperature of about 500°C. Advantageously, according to said method, the following reaction takes place at the anode electrode:

*CH*₄ + 2*O*₂ → 2*H*₂*O* + *CO*₂

Conveniently, the device 1 according to the invention has a long life span, as shown in Figures 13-16 d).

The present invention also relates to a nanostructured material characterized in that it comprises CeₓGd_{y}O_{z}, doped with metal cations, for example Cu, Co, Mo, Mn, and preferably Cu(II), and in which nanoparticles are dispersed of Pd, and in which:
- "x" is greater than or equal to 0.5 and less than or equal to 1, preferably it is 0.9;
- "y" is greater than 0 and less than or equal to 0.5, preferably it is 0.1;
- "z" is greater than or equal to 1 and less than or equal to 3, preferably it is 1.95.

### Results

Figure 8 shows the X-ray Diffraction (XRD) spectra obtained on a CGO sample after the doping and/or impregnation step with CuO nanoparticles and the following reduction sub-step. The impregnated and/or doped precursor Cu - Ce_{0.9}Gd_{0.1}O_{1.95} was successfully obtained, as evident from the results reported in figure 8. The XRD pattern indicates the presence of cubic crystals of CuO in addition to the Ce_{0.9}Gd_{0.1}O_{1.95} of the substrate. The size of the nanoparticles was estimated by the Scherrer equation; the average size of the nanocrystals is about 21 nm when the heat treatment is carried out at 600°C and about 34 nm for a calcination treatment at 1100°C. The modest increase in the average diameter as the calcination temperature increases by 450°C is a good result which allows the thermal treatment of the electrode to be defined without fearing a significant loss of the structure of the precursor and/or of the dopant.

The final nanostructured material composition is verified directly on the electrodes by in situ Raman spectroscopy. From the Raman spectrum in Figure 9 it is possible to visualize all the components of the final electrode. The main peak fixed at 450 cm⁻¹ is referred to Ce_{0.9}Gd_{0.1}O_{1.95}. CuO is recognizable thanks to the peaks located at 298, 347 and 591 cm⁻¹, where the latter is slightly less intense than the others. Finally, the successful Pd decoration is confirmed by the PdO band visible at 640 cm⁻¹ Both the CuO and PdO Raman peaks are related to the vibration of the oxygen atoms, so those peaks are no longer visible after the reduction sub-step.

The nanoparticle aggregation is a problem which also characterizes the wet impregnation procedure and which has been advantageously solved, in the impregnation, by means of a careful selection of the precursor solution. The main idea is to use a volume of solution equal to the volume of pores in the support. This strategy should lead to complete penetration of the precursor into the pores. Subsequent evaporation of the solvent should leave Pd nanoparticles deposited inside the pores of the electrode materials thus avoiding coalescence of the nanoparticles. The procedure was carried out with a solution characterized by a concentration of palladium cations sufficient to reach 1% by weight. amount in a volume corresponding to the pore volume. The subsequent heat treatment was carried out using the same conditions already mentioned for the infiltration.

The comparison between the SEM images obtained by infiltration and IWI are compared in Figure 10 a and b. As can be seen, there is no trace of agglomerates of Pd particles in the new electrode. Pd particles are highly dispersed and not visible by SEM but the presence of Pd at the surface is underlined by X-ray photoelectron spectroscopy (XPS, not shown).

Figure 11 a) shows the Nyquist graphs of Cu@ Ce_{0.9}Gd_{0.1}O_{1.95} and Cu@ Ce_{0.9}Gd_{0.1}O_{1.95} with infiltration of 0.5 and 1% Pd. A significant decrease in polarization resistance (PR) is evident between the infiltrated electrodes compared to the one tested without Pd. Furthermore, another substantial improvement in performance is given by the increase in the weight percent of Pd on the electrode surface (Table 2).

In particular, the advantages deriving from the use of certain quantities of said additional component are evident from the results shown in Table 2, where the resistance values per unit area (expressed in Ω /cm²⁾ for a symmetrical cell at different temperatures and with electrodes made with different quantities of Pd:

**Table 2**

| | Cu@ Ce _{0.9} Gd _{0.1} O _{1.95} | | | Cu@ Ce _{0.9} Gd _{0.1} O _{1.95} 0.5%Pd | | | Cu@ Ce _{0.9} Gd _{0.1} O _{1.95} 1% Pd | | |
|---|---|---|---|---|---|---|---|---|---|
| T (°C) | 1st process | 2nd process | Total | 1st process | 2nd process | Total | 1st process | 2nd process | Total |
| 710 | 2.70 | 13.40 | 16.10 | 0.66 | 1.15 | 1.81 | 0.03 | 1.80 | 1.83 |
| 680 | 3.79 | 29.94 | 33.73 | 1.17 | 4.27 | 5.44 | 0.15 | 6.31 | 6.46 |
| 650 | 15.91 | 80.00 | 95.91 | 2.76 | 10.31 | 13.07 | 0.26 | 10.68 | 10.94 |
| 600 | 66.00 | 107.00 | 173.00 | 3.00 | 58.81 | 61.81 | 0.48 | 20.87 | 21.36 |

The EIS spectra show the presence of two different contributions to the total electrode resistance. The former is set to frequencies around 10² Hz, while the latter is set to lower frequencies (10⁻² Hz). The attribution of the second process, considering the frequencies and the good adaptation of the experimental signal with the Warburg element, is to be attributed to the diffusion of the gas. Furthermore, the decrease in strength with increasing temperature has a good fit with this phenomenon. As for the high frequency (HF) process, which has been equipped with an R//CPE element. This resistance takes into account the contribution of ion transport to the grain boundary and the resistance to charge transfer. In other words, this process represents the true strength of the oxidative process.

In Figure 11 b) the comparison of Nyquist plots between 1% wt. Pd infiltration and IWI are shown. The presence of two processes is also confirmed with the new deposition and the attributions could be the same as previously discussed. Significant is the lowering of the resistance of both oxidation and diffusion processes given by the new deposition technique. At 650°C in an atmosphere of 50% CH₄ in Ar, the ASR is reduced from 10.63 Ωcm² of the infiltrated electrode to 2.42 Ωcm² with IWI. The decrease in resistance is obtained by maintaining the same amount of Pd (1% wt.).

To verify the best anodic composition, several symmetrical cells characterized by increasing amounts of Pd were created and tested. The ASR values and the corresponding Nyquist plots obtained in methane were compared in Table 3and Figure 12, respectively.

**Table 3**

| Cu@GDC | 50% CH₄ | |
|---|---|---|
| Pd amount (weight %) | Catalytic process (Ωcm²₎ | Total (Ωcm²) |
| 1 | 0.39 | 3.02 |
| 2 | 0.16 | 1.04 |
| 3 | 0.33 | 2.92 |

Data comparison clearly shows that the best composition is 2% wt Pd/Cu@GDC. In particular, a higher Pd content (3% wt) leads to the formation of large particles which lead to the cancellation of the beneficial effects of the noble metal on the catalytic activation of methane. Once the electrode composition has been optimized, the next step is the evaluation of electrode life. To this end, various tests were carried out for extended times, also considering the intermittence. The results are summarized in Figure 13. Naturally the test cannot be considered a probative test for the long-term reliability of the material, but it certainly can be indicative of its behavior in the first hours of operation, which are widely known in the literature as the most affected by performance degradation. After an initial decrease in ASR due to stabilization of test conditions, an increase in drag occurs. In any case, no significant change in ASR was detected between the 10th and 30th hours. After the second shutdown there is a strong temporary decrease in ASR due to the positive effect on the electronic conductivity that coke coal can give. Advantageously, thanks to the choice of the nanostructured material, it is possible to effectively balance the effect of increased conductivity given by the carbon deposit, and the poisoning effect of the anodic material itself.

Once the electrode has been developed, optimized and tested, the next step is the development and optimization of the complete cell. The device has been manufactured with the method according to the invention. The cell is: Pd 2% wt./Cu@ Ce_{0.9}Gd_{0.1}O_{1.95} / Ce_{0.9}Gd_{0.1}O_{1.95} /LSCF.

One of the major problems for methane-fueled SOFCs is carbon deposition on the electrode surface. This can lead to several problems such as inhibition of gas transport, triple phase boundary blocking (TPB) and metal catalyst failure. Since Pd is a good catalyst not only for the methane oxidation reaction but also for carbon cracking, this can be a serious problem. For this reason an in operando Raman spectroscopy was performed to better understand this phenomenon. In Figure 14 a) it can be seen that the band Ce_{0.9}Gd_{0.1}O_{1.95} at 450 cm⁻¹ is still visible after reduction. Since carbon deposition can be both ordered and disordered, there are two signals referring to carbon. The first is the dirty band (dirt, D) at about 1300 cm^{-1,} while at 1600 cm⁻¹ there is the peak given by the ordered Graphitic structure (G). As can be seen, both the D and G bands decrease in intensity with increasing temperatures. This can be related to the oxidative properties of Ce_{0.9}Gd_{0.1}O_{1.95}, which are enhanced as the temperature increases. Obviously this feature is another important milestone of this material towards commercial application for methane fueled SOFCs. Furthermore, the signal has been shown to stabilize in intensity after a few minutes, suggesting that there is a limit to carbon coking. Finally, in Figure 14 b) it is possible to observe how a few minutes of operation in nitrogen are sufficient to remove all the carbon deposition. Usually air is used to oxidize the coke and remove it from the surface, but this would have detrimental effects on the mechanical stability of the electrodes due to the strong oxidation of Cu and Pd. Thus, the ability to use N₂ as a carrier to remove carbon on the surface may improve the reliability of this material.

The total resistance of the complete cell with the anode electrode infiltrated with 2% by weight of Pd is better than that obtained using 1% Pd (Figure 15a) as expected from symmetric cell tests. This is also confirmed by the power/potential curves (34 mW/cm² and 29 mW/cm² respectively for 2% and 1% Pd wt.). This type of experiments was performed on button cells, supported by the electrolyte. The linear polarization curves of the designed pure methane cell are shown in Figure 15 b). The open circuit potential (Open Circuit Potential, OCP), indicator of the correct functioning of the cell, is quite high and reproducible. This means that the electrode performs well and that good device performance can be obtained by decreasing the thickness of the electrolyte and optimizing the cell construction procedure. Another advantage of the electrode according to the invention concerns the working capacity of the electrode developed under 100% methane: an excellent result if compared with the state of the art. Furthermore, this is also confirmed at the very low target temperature of 500°C. Finally, the performance of the new concept cell was studied with the fuel mixture suggested by the models to be the most performing in H₂ + CH_{4.} This mixture is composed of 20% hydrogen and 30% CH_{4.} Ar is used for balance. The Nyquist diagrams and the power/potential curves obtained for the model mixture are compared in Figure 15 b); the comparison between the results obtained suggests that the model mixture allows to achieve better performances than both hydrogen (20%) and methane (100%). To evaluate the stability, the cell was tested in a two-day campaign and the results are summarized in Figure 15 and Table 4.

**Table 4**

| Time (hours) | ASR (Ωcm²⁾ | OCP(V) | Power (mW/cm²⁾ | CH4 Power (mW/cm²⁾ | 20% H2 Power (mW/cm²⁾ |
|---|---|---|---|---|---|
| 0 | 2.27 | 0.92 | 56 | 17 | 44 |
| 22 (after power off and on) | 1.95 | 0.91 | 50 | - | - |
| 25 | 1.95 | 0.91 | 50 | - | - |
| 30 | 1.89 | 0.91 | 50 | - | - |
| 32 | 1.86 | 0.91 | 49 | - | - |
| 46 | 1.81 | 0.91 | 48 | - | - |
| 50 | 1.84 | 0.90 | 48 | - | - |

There is a contrast between the slight decrease in ASR and the opposite decrease in peak horsepower. The first can be attributed to the formation of some carbon particles which contribute to improving the electronic conductivity. Conversely, the presence of carbon on the electrode surface reduces the catalytic activity, with the consequent lower performance recorded. However, no significant harmful effects were observed in the first hours of operation which could warn of the application of this new nanostructured material.

Figure 16 shows the results of a linear scanning voltammetry (LSV) experiment on a cell according to the invention comprising Lanthanum Strontium Cobalt Ferrite (LSCF): Ce_{0.9}Gd_{0.1}O_{1.95} (50:50)/ Ce_{0.9}Gd_{0.1}O_{1.95}/Cu@ Ce_{0.9}Gd_{0.1}O_{1.95}-2%Pd(wt) in a gas mixture comprising CH ₄ :H ₂ in a ratio of 3:2.

Table 4 shows a summary of the results of the different studies carried out on a device 1 according to the invention.

Conveniently, the device 1 according to the invention is particularly effective even at low temperatures, as shown by the experiments summarized in table 5:

**Table 5**

| T (°C) | Atmosphere | OCP(V) | Power (mW/cm²⁾ |
|---|---|---|---|
| 650 | ₂₀ %H₂ | 0.84 | 71 |
| 600 | 20% H₂ | 0.9 | 44 |
| | 20% H₂ / 30% CH₄ | 0.92 | 52 |
| | ₁₀₀ % CH₄ | 0.83 | 17 |
| 550 | 20% H₂ | 0.96 | 27 |
| | 20% H₂ / 30% CH₄ | 0.96 | 29 |
| | 100% CH₄ | 0.74 | 4 |
| 500 | 20% H₂ | 0.98 | 12 |
| | 20% H₂ / 30% CH₄ | 0.98 | 14 |
| | 100% CH₄ | 0.70 | 1 |

The device according to the invention is also configured to use ammonia (NH₃) as fuel gas. The reaction mechanism in this type of cell provides for a preliminary cracking of the ammonia molecule into N₂ and H₂ and the subsequent use of the hydrogen produced as fuel. Figure 17 **Errore. L'origine riferimento non è stata trovata.**shows the Nyquist diagrams obtained by feeding a device according to the invention with a fuel gas containing 40% of NH₃ with complement of Ar. The tests were carried out at temperatures between 650°C and 500°C.

Table 6 shows the resistance values obtained with a device according to the invention, and for a symmetrical cell, as a function of the operating temperature, and a comparison with the resistance obtained in methane with the same type of measurement. The results show how the material is potentially able to give performances comparable to the methane application

**Table 6**

| | 40% NH₃ | 50% CH₄ |
|---|---|---|
| T (°C) | ASR (Ω cm²⁾ | ASR (Ω cm²⁾ |
| 500 | 47.08 | |
| 550 | 20.28 | |
| 600 | 6.02 | |
| 650 | 1.08 | 1.04 |

As is clear from what has been said, the device according to the invention is particularly advantageous because:
- using methane directly as fuel does not require a methane reforming stage or its conversion into hydrogen, thus allowing to reduce the plant complexity by removing a reactor and a purification system,
- allows to operate at temperatures equal to or higher than about 500°C, with important advantages in terms of safety (in particular considering that the self-ignition temperature of methane is 600°C) and also in terms of maintenance and maintenance costs as the higher the temperature the greater the wear,
- it is highly versatile in terms of fuel composition, which can be methane, hydrogen, ammonia or any mixture of the three, and this is particularly useful in view of possible hydrogen injections into pipelines.

The present invention has been illustrated and described in a preferred embodiment thereof, but it is understood that executive variants can be applied to it in practice, without however departing from the scope of protection of the present patent for industrial invention.

## Claims

1. Electrochemical device (1) for the production of electrical energy starting from at least one hydrocarbon, preferably methane, or from hydrogen or any mixture thereof, or from bioalcohols, bioethers, syngas, biogas, or ammonia, comprising at least one electrochemical cell (6) which includes:
- an anode electrode (8),
- a cathode electrode (10),
- an electrolyte (12) which is interposed between the anode electrode (8) and the cathode electrode (10) and which is configured to allow the passage of at least one ionic species, and preferably O²⁻ ions
and **characterized in that** said anodic electrode (8) comprises a nanostructured material comprising CeₓGd_{y}O_{z} which is impregnated and/ or doped with cations of at least one metal selected from Cu, Co, Mo Mn Fe, W, Ag, Au, Cr, and in which Pd or Pt nanoparticles are dispersed.

2. Electrochemical device according to the previous claim **characterized in that** said metal is Cu and/or said nanoparticles are Pd.

3. Electrochemical device (1) according to one or more of the preceding claims **characterized in that** in CeₓGd_{y}O_{z}
- "x" is greater than or equal to 0.5 and less than or equal to 1, preferably it is 0.9;
- "y" is greater than 0 and less than or equal to 0.5, preferably it is 0.1;
- "z" is greater than or equal to 1 and less than or equal to 3, preferably it is 1.95.

4. Device according to one or more of the preceding claims **characterized in that** said Pd or Pt nanoparticles are in an amount ranging from about 1 - 3% by weight, and preferably about 2% by weight.

5. Device according to one or more of the preceding claims **characterized in that** said cations of a metal consist of nanoparticles of copper oxide (II), preferably with dimensions lower than 100 nm and more preferably lower than 50 nm.

6. Method for the production of electricity starting from at least one hydrocarbon, preferably methane, or from hydrogen or any mixture thereof, or from bioalcohols, bioethers, syngas, biogas, or ammonia, **characterized in that** it uses an electrochemical device (1) according to one or more of the preceding claims and further **characterized in that**, during use, said electrochemical cell (6) of said device is kept at a temperature lower than 600°C, and preferably at a temperature of about 500°C.

7. Method according to the previous claim **characterized in that** the following reaction takes place at the anode electrode (8) of said electrochemical device (1):
*CH*₄ + 2*O*₂ → 2*H*₂*O* + *CO*₂.

8. Method for preparing a nanostructured material for making an anodic electrode (8) of an electrochemical device (1), **characterized in that** it comprises, preferably in order, the following steps:
- a step of making available a precursor comprising CeₓGd_{y}O_{z}, preferably with:
∘ "x" is greater than or equal to 0.5 and less than or equal to 1, more preferably it is 0.9,
∘ "y" is greater than 0 and less than or equal to 0.5, preferably it is 0.1;
∘ "z" is greater than or equal to 1 and less than or equal to 3, preferably it is 1.95.
- a doping/impregnation step of said precursor with metal cations of at least one metal selected from Cu, Co, Mo, Mn, Fe, W, Ag, Au, Cr, and preferably with Cu(ll) cations, for thus obtaining an impregnated and/or doped intermediate,
- a step of adding a further component, preferably based on Pd or Pt, on said impregnated and/or doped intermediate, to thus obtain said nanostructured material.

9. Method according to the preceding claim, **characterized in that** said doping and/or impregnation step involves introducing into a solution, which also contains at least one complexing agent, a powder of said precursor and a powder of said metal cations, to thus obtain said impregnated and/or doped intermediate.

10. Method according to one or more of claims 8 or 9, **characterized in that** said doping and/or impregnation step comprises a heat treatment step.

11. Method according to one or more of claims 8-10, **characterized in that** said doping and/or impregnation step is carried out by means of an "incipient wetness infiltration" process.

12. Method according to one or more of claims 8-11, **characterized in that** it comprises - after the doping step, and after the possible heat treatment step, and before the step of adding said further component - a step for preparing a ink starting from the doped intermediate and a preliminary step of deposition of the ink, thus obtained, on a substrate.

13. Method according to one or more of claims 8-12, **characterized in that** it provides for the addition of at least one porous agent to the impregnated and/or doped intermediate, preferably to the ink obtained starting from said impregnated and/or doped intermediate.

14. Method according to claims 12 or 13, **characterized in that** it comprises, after the step of deposition of the doped intermediate on the substrate, preferably after the step of deposition on the substrate of the ink obtained starting from said doped intermediate, a heating step at a temperature above about 900°C, and preferably above about 1050°C.

15. Nanostructured material **characterized in that** it comprises CeₓGd_{y}O_{z}, impregnated and/or doped with cations of at least one metal selected from Cu, Co, Mo Fe, W, Ag, Au, Cr or Mn, and in which nanoparticles are dispersed of Pd or Pt, and in which:
- "x" is greater than or equal to 0.5 and less than or equal to 1, preferably it is 0.9;
- "y" is greater than 0 and less than or equal to 0.5, preferably it is 0.1;
- "z" is greater than or equal to 1 and less than or equal to 3, preferably it is 1.95.
